(19) **Europäisches Patentamt / European Patent Office / Office européen des brevets**

(11) **EP 2 904 425 B1**

(12) **FASCICULE DE BREVET EUROPEEN**

(45) Date de publication et mention
de la délivrance du brevet:
**01.05.2019 Bulletin 2019/18**

(21) Numéro de dépôt: **13774411.6**

(22) Date de dépôt: **08.10.2013**

(51) Int Cl.:
***G01T 1/29*** *(2006.01)*

(86) Numéro de dépôt international:
**PCT/EP2013/070916**

(87) Numéro de publication internationale:
**WO 2014/056893 (17.04.2014 Gazette 2014/16)**

(54) **PROCÉDÉ ET DISPOSITIF DE DÉTECTION D'UN RAYONNEMENT IONISANT PAR UN PHOTODÉTECTEUR PIXELLISÉ**

VERFAHREN UND VORRICHTUNG FÜR DEN NACHWEIS VON IONISIERENDER STRAHLUNG UNTER VERWENDUNG EINES PIXELIERTEN FOTODETEKTORS

METHOD AND DEVICE FOR DETECTING IONISING RADIATION USING A PIXELLATED PHOTODETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2012 FR 1259541**

(43) Date de publication de la demande:
**12.08.2015 Bulletin 2015/33**

(73) Titulaire: **Commissariat à l'Énergie Atomique et aux Énergies Alternatives 75015 Paris (FR)**

(72) Inventeurs:
• **LUX, Silvère**
**F-67240 Schirrhein (FR)**
• **MONTEMONT, Guillaume**
**F-38000 Grenoble (FR)**

(74) Mandataire: **Brevalex**
**95, rue d'Amsterdam**
**75378 Paris Cedex 8 (FR)**

(56) Documents cités:
**EP-A1- 1 548 465        US-A1- 2008 042 070**
**US-A1- 2011 082 659      US-A1- 2011 220 804**

**Description**

**DOMAINE TECHNIQUE**

La présente invention concerne de manière générale le domaine des détecteurs de rayonnements ionisants et celui des méthodes de traitement de signaux issus de tels détecteurs.

**ÉTAT DE LA TECHNIQUE ANTÉRIEURE**

Les détecteurs semi-conducteurs de rayonnement ionisant, tel que par exemple un rayonnement X ou $\gamma$, sont bien connus de l'état de la technique, notamment dans le domaine de la médecine, de l'astronomie et du contrôle non-destructif.

Lorsque ces détecteurs sont utilisés pour l'imagerie, il est nécessaire qu'ils puissent permettre une discrimination spatiale des photons incidents.

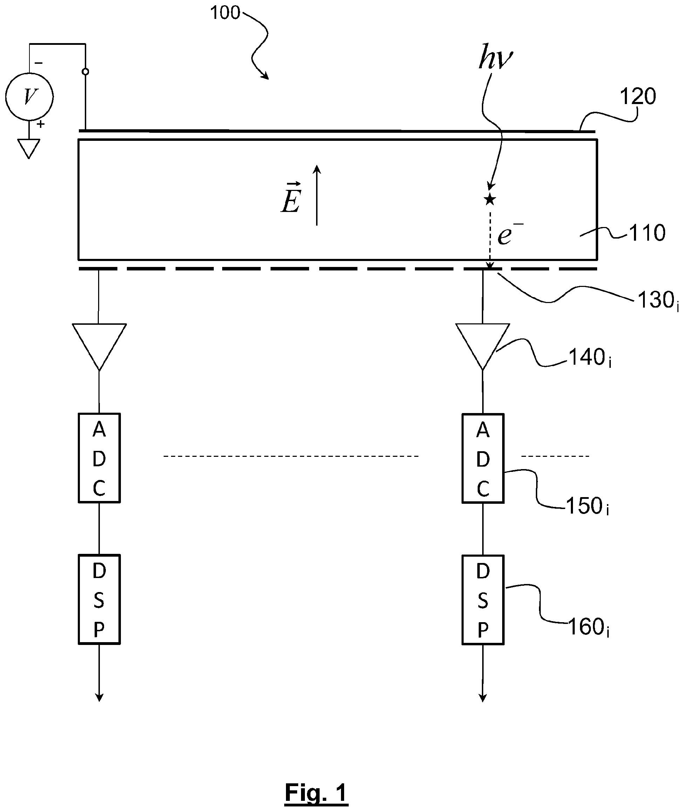

Une structure de détecteur de rayonnement ionisant communément utilisée dans l'imagerie est représentée en Fig. 1.

Ce détecteur 100 comprend un élément semi-conducteur 110 dont la face avant, exposée au rayonnement incident, est recouverte d'une première électrode 120 et la face arrière est recouverte d'une pluralité de secondes électrodes élémentaires $130_i$ distribuées selon un arrangement périodique mono- ou bi- dimensionnel. Ainsi, selon le cas, les secondes électrodes élémentaires peuvent prendre la forme de bandes périodiquement réparties selon une dimension, ou bien de pavés périodiquement répartis selon deux dimensions. Dans la suite, nous dénommerons conventionnellement pixels ces secondes électrodes élémentaires que l'arrangement soit mono- ou bi-dimensionnel.

Une haute tension est appliquée entre la première électrode d'une part et les secondes électrodes élémentaires d'autre part. Dans le cas illustré, la première électrode joue le rôle de cathode et les secondes électrodes élémentaires jouent le rôle d'anodes.

Un photon incident sur le détecteur, d'énergie supérieure à la largeur de la bande interdite du semi-conducteur, génère une paire électron-trou, l'électron migrant vers une anode et le trou vers la cathode sous l'effet du champ électrique au sein du semi-conducteur. De manière générale, en fonction de son énergie, un photon incident peut générer une ou plusieurs paires électron-trou lors de son interaction avec le semi-conducteur, chaque paire ayant le comportement précédent indiqué.

Chaque seconde électrode élémentaire ou pixel $130_i$ est reliée à un préamplificateur $140_i$. Le signal issu du pixel $130_i$, proportionnel à la charge collectée, et donc à l'énergie déposée par le photon, est amplifié par le préamplificateur $140_i$, puis numérisé par un convertisseur analogique numérique $150_i$, avant d'être traité par un circuit intégré de traitement de signal (DSP), $160_i$, généralement réalisé sous forme de circuit ASIC ou FGPA.

Ainsi, lorsqu'un photon incident interagit avec le semi-conducteur, le pixel situé au droit de la position d'interaction collecte une charge qui se traduit par une impulsion en entrée du préamplificateur. Il est alors possible, après traitement, de déterminer le pixel qui a été « touché », autrement dit celui qui a collecté cette charge, et d'en déduire les coordonnées du point d'interaction avec une précision égale au pas de pixellisation, c'est-à-dire à la période spatiale des pixels.

Toutefois, la détermination du point d'interaction peut être affectée par deux phénomènes perturbateurs.

Le premier phénomène dit de « partage de charge » intervient lorsque le pas de pixellisation est faible par rapport à la taille du nuage de charges créé lors de l'interaction. Dans une telle situation, les différentes charges, par exemple les électrons dans le cas d'une anode pixellisée, peuvent être collectées par des pixels adjacents. L'importance du phénomène dépend en outre de la géométrie du détecteur, de l'énergie du photon incident et de la profondeur d'interaction.

Le second phénomène est celui dit de « charge induite ». En effet lorsqu'un porteur de charge est généré puis migre dans le semi-conducteur, 110, celui-ci induit un courant dans les électrodes élémentaires $130_i$. Les électrons ayant une mobilité supérieure à celle des trous, on voit généralement apparaître en sortie des pixels avoisinant le pixel touché, d'abord un lobe positif puis un lobe négatif, l'instant d'inversion de signe correspondant sensiblement à l'instant de collecte de l'électron ou des électrons par le pixel touché. Le phénomène de charge induite est largement décrit dans la littérature et est rappelé dans le brevet US-B-6169287.

Une première voie pour améliorer la résolution spatiale des détecteurs semi-conducteur pixellisés consiste à réduire le pas de pixellisation. Toutefois, le phénomène de partage de charge mentionné ci-dessus ne permet ni d'obtenir un grain important en résolution ni d'estimer avec précision l'énergie déposée par le photon. En outre, elle nécessite un très grand nombre d'amplificateurs, convertisseurs ADC et circuits de traitement, ce qui conduit à des détecteurs complexes et coûteux. En outre, cela entraîne des difficultés d'hybridation du détecteur sur le circuit.

Une seconde voie, plus prometteuse, consiste à effectuer un traitement sur les signaux issus de plusieurs pixels adjacents pour obtenir une résolution inférieure à celle du pas de pixellisation.

Le brevet US-B-6002741 décrit un détecteur dans laquelle la position d'interaction d'un photon est obtenue avec une résolution inférieure au pas de pixellisation du détecteur. Plus précisément, il est proposé d'interpoler les valeurs respectives des signaux issus du pixel touché et des pixels adjacents à l'instant de l'interaction de manière à obtenir un profil de charge à cet instant et de comparer le profil ainsi obtenu avec des profils types, calculés pour des points d'interaction possibles séparés d'une distance inférieure au pas de pixellisation, le profil type le plus proche de celui obtenu fournissant les coordonnées du point d'interaction. Cette méthode présente toutefois l'inconvénient d'exploiter les signaux issus des pixels voisins du pixel touché au moment où ceux-ci sont très faibles de sorte qu'ils sont généralement noyés dans du bruit. Il peut donc en résulter une erreur significative sur les coordonnées du point d'interaction.

Le brevet US-B-6169287 précité décrit également une méthode d'amélioration de la résolution spatiale du détecteur exploitant les signaux transitoires issus des pixels voisins du pixel touché. Plus précisément, il est proposé de calculer une réponse différentielle obtenue par différence entre les signaux issus du pixel voisin à gauche et du pixel voisin à droite un pixel touché et de déduire du pic d'amplitude de cette réponse différentielle la position du point d'interaction. L'inconvénient de cette méthode est là encore qu'elle est très sensible au bruit, en particulier lorsque la position d'interaction est proche du centre du pixel touché. En effet, dans ce cas, l'amplitude de la réponse différentielle est très faible, les charges induites dans les pixels voisins étant symétriquement distribuées autour du centre du pixel en question. Il en résulte que le pic d'amplitude peut être alors noyé dans le bruit et que l'estimation de la position d'interaction est entachée d'erreur.

Un but de la présente invention est par conséquent de proposer une méthode de détection de rayonnement ionisant, à l'aide d'un détecteur semi-conducteur pixellisé, permettant d'obtenir une résolution spatiale inférieure au pas de pixellisation tout en assurant une bonne robustesse de l'estimation de la position d'interaction vis-à-vis du bruit. Un autre but de la présente invention est de proposer une structure de détecteur semi-conducteur pixellisé permettant de mettre en oeuvre ladite méthode. Enfin, un but subsidiaire de la présente invention est de proposer une méthode de calibration d'un tel détecteur semi-conducteur pixellisé. Par ailleurs, la demande de brevet EP 1 548 465 décrit une méthode de détection d'un rayonnement ionisant à l'aide d'un détecteur semi-conducteur pixellisé en une pluralité de pixels, chaque pixel fournissant un signal caractéristique de la charge qu'il collecte lors d'une interaction du rayonnement ionisant avec le détecteur, la méthode comprenant les étapes suivantes : (a) détermination d'un pixel, dit pixel touché, dont l'amplitude du signal excède un seuil prédéterminé; (b) détermination du maximum en amplitude du signal dudit pixel touché, ce maximum en amplitude permettant de définir l'instant d'impact; (c) pour au moins un pixel voisin du pixel touché, détermination d'une mesure du signal dudit pixel voisin correspondant aussi au maximum en amplitude dudit pixel voisin; et (d) estimation d'au moins une coordonnée du point de l'interaction du rayonnement ionisant à partir de ladite mesure.

## EXPOSÉ DE L'INVENTION

La présente invention est définie comme une méthode de détection d'un rayonnement ionisant à l'aide d'un détecteur semi-conducteur pixellisé en une pluralité de pixels, telle que définie par la revendication 1.

Avantageusement, lesdits premier et second instants sont déterminés comme ceux présentant une dispersion statistique maximale de la dite excursion de signal.

Typiquement, à l'étape (c), on détermine les excursions respectives, $M_Q$, des signaux d'un ensemble $V$ de pixels voisins, $Q$, du point touché et à l'étape (d), on estime la coordonnée du point d'interaction du rayonnement ionisant à partir desdites excursions.

Selon un premier mode de réalisation la coordonnée, $x$, du point d'interaction est estimée selon une estimation du maximum de vraisemblance, en maximisant conjointement les probabilités conditionnelles $p(M_Q|x_i)$, $Q \in V$, où les $x_i$ sont une pluralité de valeurs discrètes possibles de ladite coordonnée, les lois des probabilités conditionnelles $p(M_Q|x_i)$ ayant été préalablement déterminées dans une phase de calibration ou de simulation.

La coordonnée, $x$, du point d'interaction peut alors être estimée au moyen de :

$$\hat{x} = \arg\max_i \left( \prod_{Q \in V} P\left( M_Q \middle| x_i \right) \right)$$

Selon une variante du premier mode de réalisation, la coordonnée, $x$, du point d'interaction est estimée selon une estimation du maximum de vraisemblance, en maximisant conjointement les probabilités conditionnelles $p(\overline{M}_Q|x_i)$, $Q \in V$, où $\overline{M}_Q$ est l'excursion normalisée par l'énergie $E_0$ du signal du pixel touché et où les $x_i$ sont une pluralité de valeurs discrètes possibles de ladite coordonnée, les lois des probabilités conditionnelles $p(\overline{M}_Q|x_i)$ ayant été préalable-

ment déterminées dans une phase de calibration ou de simulation.

La coordonnée, *x*, du point d'interaction peut alors être estimée au moyen de :

$$\hat{x} = \arg\max_i \left( \prod_{Q \in V} P\left(\bar{M}_Q \big| x_i\right) \right)$$

Selon une autre variante du premier mode de réalisation, la cordonnée, *x*, du point d'interaction est estimée selon une estimation du maximum de vraisemblance, en maximisant conjointement les probabilités conditionnelles $p(M_Q|x_i)$ ainsi que les probabilités conditionnelles $P(E_0|x_i)$, où $E_0$ représente l'énergie du signal du pixel touché et les $x_i$ sont une pluralité de valeurs discrètes possibles de ladite coordonnée, les lois de probabilités conditionnelles $p(M_Q|x_i)$ et $P(E_0|x_i)$ ayant été préalablement déterminées dans une phase de calibration ou de simulation.

La coordonnée, *x*, du point d'interaction peut alors être estimée par :

$$\hat{x} = \arg\max_i \left( P(E_n|x_i) \prod_{Q \in V} P\left(M_Q\big|x_i\right) \right)$$

Selon un second mode de réalisation, la coordonnée du point d'interaction est estimée par :

$$\hat{x} = U\left(B_x\right)$$

où $B_x$ est la coordonnée du barycentre des pixels de *V* pondérés par leurs excursions respectives, $M_Q$, et du pixel touché, pondéré par l'amplitude du signal dudit pixel touché au temps d'impact, et où $U(B_x)$ est une fonction uniformisant la distribution de $B_x$ sous illumination uniforme du récepteur, déterminée par calibration ou simulation.

La fonction $U(B_x)$ est avantageusement déterminée par $U(B_x) = p[F(B_x)-1/2]$ où *p* est le pas de pixellisation du détecteur et $F(B_x)$ est la fonction de répartition du barycentre $B_x$ sous illumination uniforme du détecteur.

L'invention concerne également un détecteur de rayonnement ionisant tel que défini par la revendication 12.

Les signaux lus par les voies de lecture sont avantageusement filtrés par des moyens de filtrage en amont des moyens de synchronisation et des moyens de stockage.

Selon un premier mode de réalisation, le détecteur comprend une mémoire dans laquelle sont stockées, pour chaque pixel voisin dudit ensemble, les probabilités conditionnelles des excursions, $p(M_Q|x_i)$, pour une pluralité de valeurs discrètes de la coordonnée $x_i$, $i = 1,..,N$.

Le détecteur peut également comprendre une mémoire dans laquelle est stockée, pour chaque point voisin appartenant audit ensemble, une table donnant la distribution statistique de l'excursion du signal lu de ce pixel.

L'invention concerne en outre une méthode de calibration du détecteur ci-dessus, selon laquelle :

- on balaye le détecteur à l'aide d'un faisceau fortement collimaté de sorte à illuminer successivement une pluralité de points de coordonnées $x_i$, $i = 1,..,N$ ;
- pour chaque point ainsi illuminé, on calcule, pour chaque pixel touché, les excursions respectives, $M_Q$, des signaux lus d'un ensemble de pixels voisins du pixel touché, les excursions étant calculées entre lesdits premier et second instants ;
- pour chaque point illuminé, on met à jour une table donnant une distribution statistique desdites excursions, $p(M_Q|x_i)$.

On peut en outre normaliser les excursions des signaux lus d'un ensemble de pixels voisins du pixel touché par l'énergie ($E_0$) du signal dudit pixel touché avant de mettre à jour ladite table.

L'invention concerne en outre une méthode de calibration du détecteur ci-dessus dans laquelle :

- on illumine le détecteur à l'aide d'un rayonnement ionisant uniforme ;
- on calcule, pour chaque pixel touché, les excursions respectives, $M_Q$, des signaux lus d'un ensemble de pixels voisins du pixel touché, les excursions étant calculées entre lesdits premier et second instants ;
- pour chaque pixel voisin appartenant audit ensemble, on met à jour une table donnant la distribution statistique de l'excursion de signal lu de ce pixel.

## BRÈVE DESCRIPTION DES DESSINS

La Fig. 1 déjà décrite illustre schématiquement la structure d'un détecteur de rayonnement ionisant connu de l'état de la technique ;

La Fig. 2 représente de manière schématique un arrangement de pixels autour d'un pixel touché ;

La Fig. 3A représente la distribution statistique du signal d'un pixel touché pour une pluralité d'interactions de photons incidents avec le semi-conducteur ;

La Fig. 3B représente la distribution statistique du signal d'un pixel voisin du pixel touché, pour la même pluralité d'interactions ;

La Fig. 4 illustre de manière schématique un ordinogramme de la méthode de détection de rayonnement ionisant selon un premier mode de réalisation de l'invention ;

La Fig. 5A illustre la relation entre la position d'interaction, estimée par une méthode de détection connue de l'état de la technique et la position d'interaction vraie ;

La Fig. 5B illustre la relation entre la position d'interaction, estimée par la méthode de détection connue selon le premier mode de réalisation de l'invention et la position d'interaction vraie ;

La Fig. 6 illustre de manière schématique un ordinogramme de la méthode de détection de rayonnement ionisant selon un second mode de réalisation de l'invention ;

La Fig. 7A représente la distribution statistique d'un barycentre lorsque le détecteur est uniformément illuminé ;

La Fig. 7B représente l'histogramme de ce barycentre ;

La Fig. 7C représente l'histogramme d'une transformée de ce barycentre ;

La Fig. 8 représente de manière schématique la structure d'un détecteur de rayonnement ionisant selon un mode de réalisation de l'invention.

## EXPOSÉ DÉTAILLÉ DE MODES DE RÉALISATION PARTICULIERS

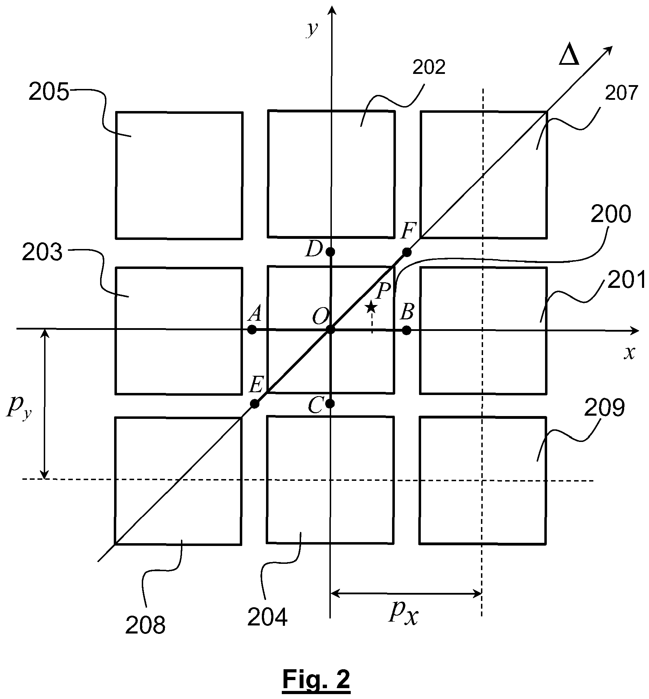

Nous considérerons dans la suite un détecteur de rayonnement ionisant, pixellisé au sens défini plus haut. Nous supposerons que les pixels sont arrangés selon deux directions orthogonales Ox et Oy comme illustré sur la Fig. 2 et que le pas de pixellisation dans la direction Ox (la période spatiale $p_x$ des pixels selon la direction Ox) est identique au pas de pixellisation dans la direction Oy (la période spatiale $p_y$ des pixels selon la direction Oy), $p_x = p_y = p$. Il est cependant clair que l'invention trouverait à s'appliquer si ces périodes spatiales étaient distinctes. On supposera également que le pas de pixellisation est suffisamment important et la taille des pixels suffisamment grande pour que le phénomène de partage de charge soit négligeable. Par exemple, la taille des pixels pourra être de l'ordre du mm, taille bien supérieure à l'extension spatiale du nuage de charges issu de l'interaction avec le semi-conducteur (de l'ordre de 100 $\mu m$).

Pour des raisons d'illustration seulement, nous supposerons que les pixels sont ici des anodes et qu'une cathode recouvre la face du détecteur exposée au rayonnement incident. Toutefois, l'invention s'applique également dans le cas symétrique où les pixels sont des cathodes et où une anode commune recouvre la face du détecteur exposée au rayonnement incident.

L'origine O du détecteur a été arbitrairement choisie au centre du pixel $n$, 200, que nous supposerons être le pixel touché, c'est-à-dire le pixel collectant le ou les électrons issus de l'interaction d'un photon avec le semi-conducteur. On a par ailleurs représenté par $P$ la projection du point d'interaction dans le plan Oxy du détecteur.

Le signal $S_n$, issu du pixel $n$, encore dénommé signal de charge, est fonction de la charge collectée, c'est-à-dire de l'énergie fournie au semi-conducteur par le photon incident au point d'interaction.

Le signal $S_n$ est avantageusement filtré, par exemple à l'aide d'un filtre cusp connu en soi. Ce filtre présente une réponse impulsionnelle de la forme $e^{-\frac{|t|}{\tau}}$. Alternativement, le signal $S_n$ peut être filtré à l'aide d'un filtre à réponse impulsionnelle gaussienne.

De manière générale, le filtre utilisé sera choisi pour obtenir une impulsion dont les caractéristiques (amplitude et/ou intégrale) sont proportionnelles à la charge collectée.

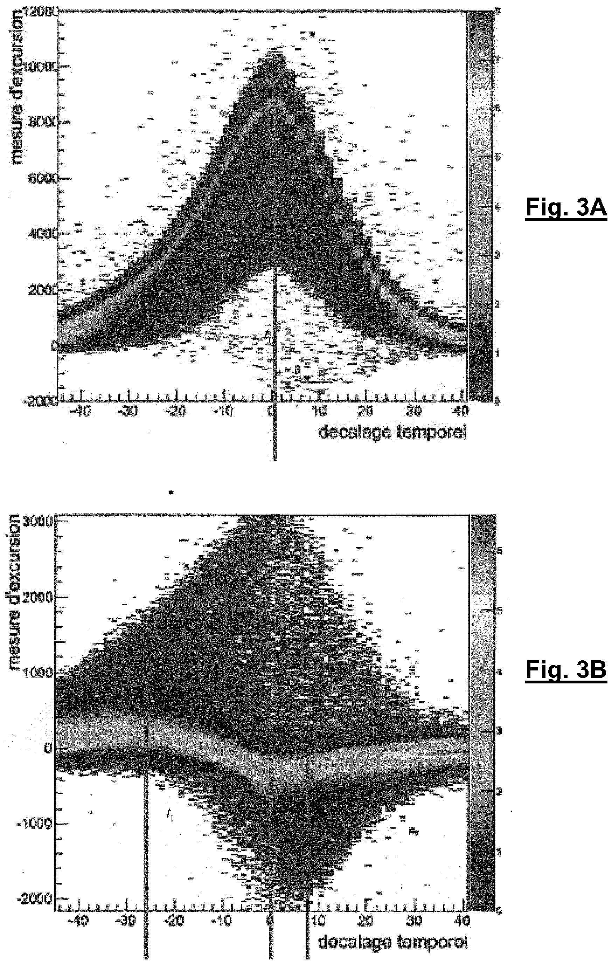

Des courbes du signal $S_n$ en fonction du temps, après filtrage, sont illustrées en Fig. 3A. Plus précisément, on a représenté sur cette figure une distribution statistique du signal $S_n$ pour différentes positions du point d'interaction, autrement dit pour différentes positions de $P$ à l'intérieur de la surface du pixel 200. Les courbes du signal $S_n$ ont la forme d'une impulsion et sensiblement symétrique autour d'un temps $t_0$. Ce temps $t_0$ définit l'instant ou le pixel $n$ est touché et sert de temps de référence dans la suite des mesures, comme expliqué plus loin. On dénommera également par la suite $t_0$ comme l'instant d'impact (du pixel touché).

La Fig. 3B représente un signal issu d'un pixel voisin du pixel touché, par exemple le signal du pixel situé à sa droite, 201, noté ici $S_{n+1}$, ou le signal issu du pixel situé à sa gauche, 203, noté ici $S_{n-1}$. Ce signal ($S_{n+1}$, $S_{n-1}$) est préférentiellement filtré par un filtre cusp, comme indiqué plus haut.

Plus précisément, la Fig. 3B représente une distribution statistique d'un tel signal ($S_{n-1}$, $S_{n+1}$), pour différentes positions du point d'interaction, c'est-à-dire pour différentes positions de la projection $P$ à l'intérieur de la surface du pixel touché, 200. On remarque, comme annoncé plus haut, que ce signal présente un premier lobe positif puis un second lobe négatif, le changement de signe intervenant statistiquement à un instant proche du temps $t_0$. La forme bipolaire du signal de charge serait identique pour des pixels voisins dans la direction Oy (pixel 202 au dessus du pixel touché et pixel 204 au dessous de celui-ci) et similaire pour des pixels voisins d'ordre 2, c'est-à-dire à une distance de $2p$ du pixel touché. Quel que soit l'ordre du voisinage du pixel considéré, à un premier lobe positif succède un second lobe négatif. On notera que cet ordre serait inversé si les pixels étaient des cathodes et l'électrode commune, une anode.

On considère un premier instant $t_1 = t_0 - \Delta t_1$ et un second instant $t_2 = t_0 + \Delta t_2$, respectivement antérieur et postérieur à l'instant d'impact du pixel touché, autrement dit on considère un intervalle de temps $[t_1 t_2]$ encadrant l'instant d'impact. Les instants $t_1$ et $t_2$ sont préférentiellement choisis de sorte à ce qu'ils correspondent à une dispersion maximale de l'amplitude du signal de charge, comme indiqué en Fig. 3B. Plus précisément, on peut procéder, dans une phase de calibration préalable ou bien par simulation, à une irradiation homogène du pixel $n$ et considérer la distribution statistique de l'amplitude du signal issu d'un pixel voisin ($n-1$, $n+1$ par exemple). L'instant $t_1$, respectivement $t_2$, est alors déterminé comme l'instant antérieur, respectivement postérieur, à l'instant d'impact $t_0$ où la dispersion d'amplitude du signal est maximale. On en déduit les décalages temporels $\Delta t_1$ et $\Delta t_2$ qui sont utilisés ultérieurement pour effectuer des mesures.

On notera dans la suite $M_{n+1}$ l'excursion du signal $S_{n+1}$ entre le premier instant $t_1$ et le second instant $t_2$, soit $M_{n+1} = S_{n+1}(t_0 - \Delta t_1) - S_{n+1}(t_0 + \Delta t_2)$. De même on notera $M_{n-1}$ l'excursion du signal $S_{n-1}$ en ces mêmes instants, soit $M_{n-1} = S_{n-1}(t_0 - \Delta t_1) - S_{n-1}(t_0 + \Delta t_2)$. De manière plus générale, l'excursion $M_{n+1}$ ($M_{n-1}$) sera caractéristique de l'écart d'amplitude du signal $S_{n+1}$ ($S_{n-1}$) entre le premier instant $t_1$ et le second instant $t_2$.

L'idée à la base de l'invention est d'acquérir l'excursion du signal d'au moins un pixel voisin du pixel touché et ce, de manière synchrone par rapport à l'instant d'impact, et de déterminer les coordonnées du point d'interaction dans le plan du détecteur à partir au moins de cette excursion. En effet cette excursion est calculée en utilisant des intervalles temporels ($\Delta t_1$, $\Delta t_2$) prédéterminés par rapport à l'instant d'impact $t_0$. Or cet instant est déterminé à partir du signal $S_n$ produit par le pixel touché, un tel signal présentant généralement un bon rapport signal sur bruit. Par conséquent, l'instant $t_0$, et, partant, les premier et deuxième instants $t_1$, $t_2$, sont déterminés avec une bonne précision. De surcroît, lesdits premier et deuxième instants, sont définis de telle sorte que la dispersion du signal de charge est maximale pour différentes positions du point d'interaction au sein pixel touché. Autrement dit, l'excursion calculée sur la base de ces instants varie fortement avec la position de l'interaction. La mesure de la position du point d'interaction est donc robuste vis-à-vis du bruit affectant les signaux des pixels voisins du pixel touché.

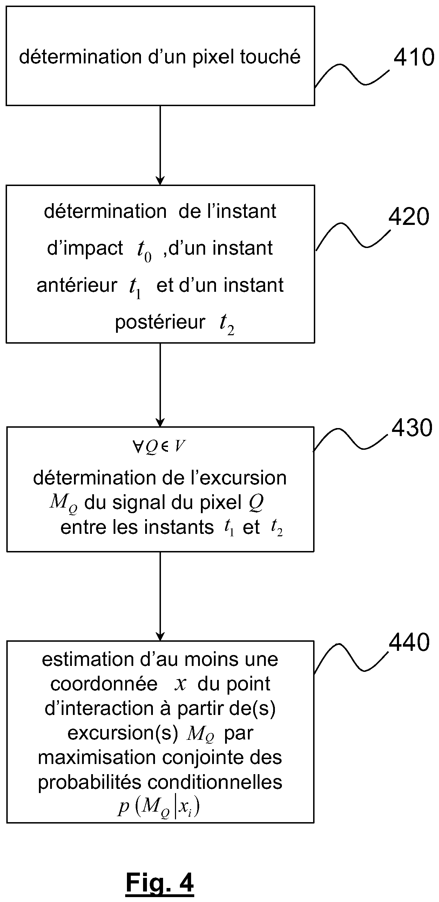

La Fig. 4 représente schématiquement la méthode de détection d'un rayonnement ionisant selon un premier mode de réalisation de l'invention.

Dans une première étape 410, on détermine un pixel touché, c'est-à-dire un pixel fournissant un signal de charge qui excède un seuil prédéterminé. Pour ce faire, on peut effectuer, pour chaque pixel du détecteur, une détection crête du signal de charge. Lorsque le maximum de ce signal, $E_n$, obtenu par la détection crête, est supérieur à un seuil prédéterminé, le pixel correspondant est considéré comme un pixel touché. Dans une variante, on stocke en outre la valeur $E_n$ de ce maximum, indicative de l'énergie reçue.

Dans une seconde étape, 420, on détermine l'instant d'impact, $t_0$ du pixel touché et on en déduit un premier instant antérieur $t_0 - \Delta t_1$ et un second instant postérieur $t_0 + \Delta t_2$ à l'instant d'impact, les décalages temporels $\Delta t_1$ et $\Delta t_2$ ayant été obtenus par une phase préalable de calibration ou de simulation, comme expliqué plus haut.

Dans une troisième étape, 430, on détermine l'excursion d'un premier signal issu d'un pixel voisin du pixel touché, entre les instants $t_0 - \Delta t_1$ et $t_0 + \Delta t_2$. De manière plus générale, on considérera un ensemble $V$ non vide de pixels voisins du point touché dans le plan Oxy et, pour chaque pixel $Q \in V$, on déterminera l'excursion $M_Q$ de son signal entre les instants $t_0 - \Delta t_1$ et $t_0 + \Delta t_2$.

Lorsqu'il s'agira de déterminer la coordonnée $x$ du point d'interaction selon l'axe Ox, l'ensemble $V$ contiendra de préférence au moins un pixel aligné avec le pixel touché selon cet axe (par exemple le pixel 201 ou 203 en Fig. 2). De même, lorsqu'il s'agira de déterminer la coordonnée $y$ du point d'interaction selon l'axe Oy, l'ensemble $V$ contiendra de préférence au moins un pixel aligné avec le pixel touché selon cet axe (par exemple les pixels 202 et 204 sur la Fig. 2) Pour déterminer simultanément les coordonnées $x,y$, l'ensemble pourra comprendre les deux pixels précédents voire un seul (par exemple l'un des pixels 205, 207, 208 ou 209).

Dans certains cas, l'ensemble $V$ sera constitué de deux pixels non nécessairement situés de part et d'autre du pixel touché. Ils peuvent être des voisins d'ordre un, c'est-à-dire des premiers voisins ou être des voisins d'un ordre supérieur du pixel touché. Enfin, les deux pixels en question peuvent être alignés ou non avec le pixel touché. De préférence toutefois, lorsqu'il s'agira de déterminer la coordonnée $x$ du point d'interaction selon un axe Ox, on considérera les pixels voisins 201 et 203 alignés selon Ox avec le pixel touché 200. Alternativement, on pourra prendre en compte les pixels 205, 207 ou bien les pixels 208, 209. De même, lorsqu'il s'agira de déterminer la coordonnée *y* du point d'interaction selon un axe Oy, on considérera les pixels voisins 202 et 204. Alternativement, on pourrait prendre en compte les pixels 205, 208 ou bien les pixels 207, 209.

Dans une quatrième étape, 440, on estime au moins une coordonnée du point d'interaction à partir des excursions de signal des pixels appartenant à *V,* telle qu'obtenue à l'étape précédente. Comme déjà mentionné, l'ensemble *V* peut se réduire à un singleton.

Dans le premier mode de réalisation, on suppose que l'on a préalablement déterminé, dans une phase de calibration ou de simulation, pour chaque pixel de *V,* la distribution de probabilité de l'excursion du signal de ce pixel, ce pour une pluralité de valeurs discrètes $x_i$ (ou $y_i$) de la coordonnée du point d'interaction. Par exemple, les valeurs discrètes peuvent être $x_i = (i/N)\dfrac{p}{2}$ $x_i$ où $i = -N,..,0,..N$ où *N* est un entier non nul dépendant du niveau de résolution souhaité.

Lors de la phase préalable de calibration ou de simulation, on détermine, les lois de probabilité conditionnelle $p(M_Q|x_i)$ pour chaque pixel $Q \in V$. Etant donné que l'arrangement des pixels est invariant par translation dans le plan, il suffit de déterminer un nombre $(2N+1).Card(V)$ de lois pour l'ensemble du détecteur.

En pratique, pour réaliser une calibration du détecteur, on balaye un pas de pixellisation de ce dernier avec un faisceau fortement collimaté, d'énergie donnée *E.* Ce balayage est avantageusement effectué selon l'axe de la coordonnée que l'on souhaite ultérieurement estimer. Autrement dit, pour une estimation de la coordonnée *x*, le balayage de la calibration est effectuée selon l'axe Ox (par exemple de *x* = -*p*/2 à *x* = +*p*/2, cf. segment AB sur la Fig. 2), pour une estimation de la coordonnée *y*, le balayage de la calibration est effectuée selon l'axe Oy (par exemple de *y* = -*p*/2 à *y* = +*p*/2, cf. segment CD sur la Fig. 2). Pour une calibration simultanée selon les deux Ox et Oy, on peut effectuer un balayage selon un axe bissecteur (par exemple selon l'axe Δ, cf. segment EF sur la Fig. 2).

Pour chaque valeur de la coordonnée $x_i$ (ou $y_i$) balayée par le faisceau, on enregistre alors la distribution statistique des excursions $M_Q$, $Q \in V$, autrement dit la loi de probabilité conditionnelle $p(M_Q|x_i)$. Ces lois se présentent sous forme d'une table de valeurs stockée dans une mémoire (*look-up table*) pour chaque valeur de la coordonnée considérée $x_i$ (et/ou $y_i$).

Selon une première variante, on estime alors à l'étape 440 la coordonnée *x* du point d'interaction en maximisant au moyen d'une estimation de maximum de vraisemblance, en maximisant conjointement les probabilités conjointes $p(M_Q|x_i)$, par exemple en maximisant leur produit :

$$\hat{x} = \arg\max_i \left( \prod_{Q \in V} P\left( M_Q \middle| x_i \right) \right) \tag{1}$$

A noter que d'autres fonctions croissantes des probabilités $p(M_Q|x_i)$ peuvent alternativement être envisagées,

par exemple $\displaystyle\sum_{Q \in V} p\left( M_Q \middle| x_i \right)$ ou $\displaystyle\sum_{Q \in V} \log\left[ p\left( M_Q \middle| x_i \right) \right]$.

Dans un cas particulier, si l'ensemble *V* se réduit au pixel voisin de gauche et au pixel voisin de droite du pixel touché et si l'on garde les mêmes notations que précédemment :

$$\hat{x} = \arg\max_i \left( P\left( M_{n-1} \middle| x_i \right).P\left( M_{n+1} \middle| x_i \right) \right) \tag{2}$$

Dans la phase de calibration ou de simulation, on peut aussi déterminer la loi de probabilité conditionnelle de l'amplitude du signal reçu par le pixel touché, $P(E_n|x_i)$, pour les différentes valeurs possibles $x_i$ de la coordonnée du point d'interaction. En effet, la distribution de probabilité $P(E_n|x_i)$ diffère selon que la projection *P* du point d'interaction est plus ou moins proche du centre du pixel touché. Comme les lois $p(M_Q|x_i)$, les lois de probabilité $P(E_n|x_i)$ peuvent être stockées sous forme de table de valeurs pour chaque coordonnée balayée $x_i$. On peut alors améliorer l'estimation de la position du point d'interaction en prenant en compte en 440 la mesure de l'amplitude du signal reçu dans la recherche du maximum de vraisemblance :

$$\hat{x} = \arg\max_i \left( P(E_n|x_i) \prod_{Q \in V} P(M_Q|x_i) \right) \qquad (3)$$

Bien entendu, comme précédemment, d'autres fonctions croissantes des $p(M_Q|x_i)$ et $P(E_n|x_i)$ peuvent être alternativement envisagées.

Dans tous les cas, cette première variante suppose toutefois que la phase de calibration/simulation ait été effectuée avec la même énergie de rayonnement que celle de la mesure, ce qui suppose que cette dernière soit connue.

En revanche, si l'énergie du rayonnement lors de la mesure est inconnue, on effectue, dans une seconde variante, une étape de normalisation (étape optionnelle 435), préalablement à l'étape d'estimation 440. L'étape 435 consiste à normaliser les excursions $M_Q$ par l'énergie reçue par le pixel touché. Autrement dit, on remplace chaque excursion $M_Q$ par sa valeur normalisée $M_Q / E_n$ où $E_n$ est la valeur indicative de l'énergie reçue par le pixel touché, stockée à l'étape 410. L'estimation est alors réalisée au moyen de l'expression (1) appliquée aux excursions ainsi normalisées.

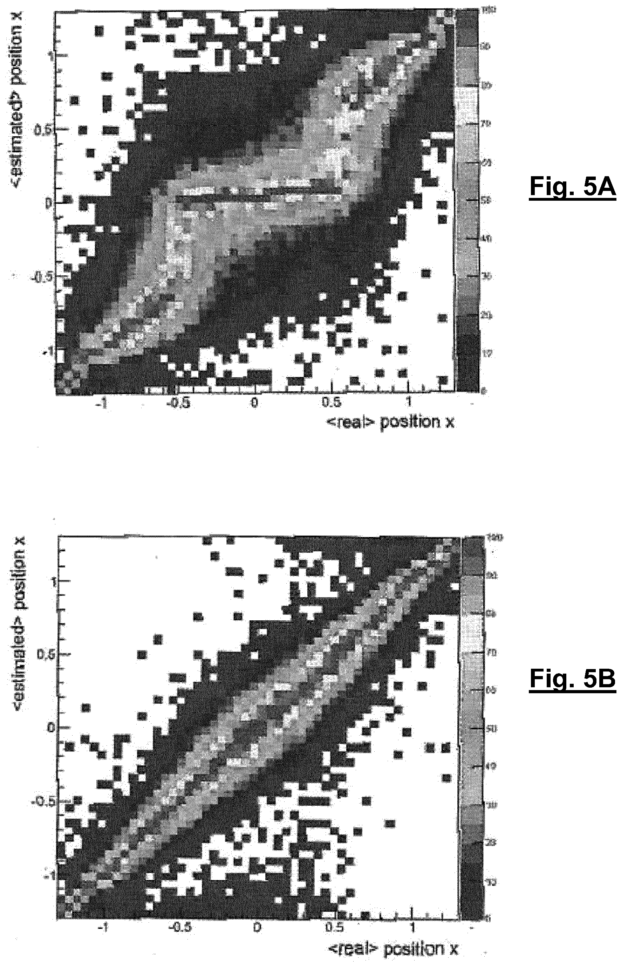

La Fig. 5A représente la relation entre la position réelle (en abscisses) et la position estimée (en ordonnées) du point d'interaction par une méthode de détection de rayonnement incident selon l'art antérieur et plus précisément selon la méthode décrite dans le brevet US-B-6169287 précité, basée sur une réponse différentielle de deux pixels voisins.

La Fig. 5B représente de manière similaire la relation entre la position réelle et la position estimée du point d'interaction par une méthode d'estimation selon le premier mode de réalisation de l'invention et plus précisément à partir de l'expression (2) ci-dessus.

On remarque que la corrélation entre la position estimée par la méthode d'estimation selon le premier mode de réalisation de l'invention et la position vraie est sensiblement meilleure que celle de l'art antérieur. Cette amélioration de l'estimation de la position d'interaction est essentiellement due au fait que les mesures d'excursion sont effectués en des instants $t_0 - \Delta t_1$ et $t_0 + \Delta t_2$, synchronisés par rapport à l'instant d'impact $t_0$, les intervalles $\Delta t_1$ et $\Delta t_2$ étant choisis de façon à accroître la précision de la localisation de l'interaction.

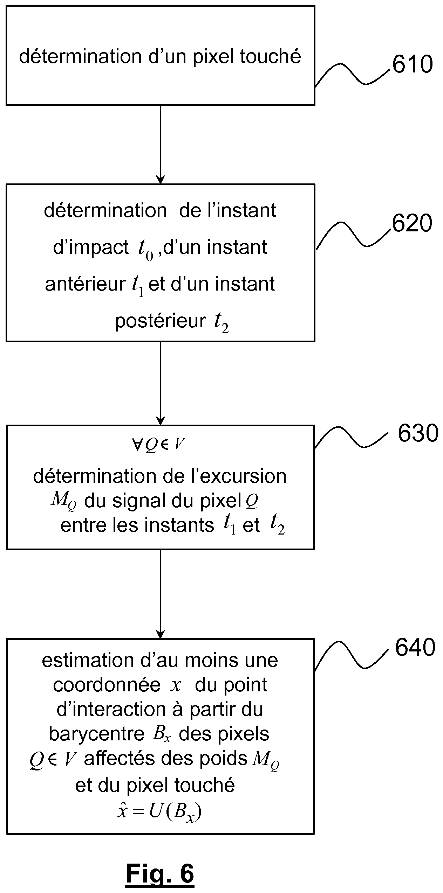

La Fig. 6 représente schématiquement la méthode de détection d'un rayonnement ionisant selon un second mode de réalisation de l'invention.

Les étapes 610, 620 et 630 sont respectivement identiques aux étapes 410, 420 et 430 du premier mode de réalisation et leur description ne sera donc pas reprise ici.

A l'étape 640, on estime au moins une coordonnée du point d'interaction à partir des excursions de signal des pixels appartenant à $V$. Dans le second mode de réalisation, Card$(V) \geq 2$, autrement dit on considère au moins deux pixels voisins du pixel touché. L'ensemble $V$ est choisi de manière à ce que les pixels voisins entourent le pixel touché, c'est-à-dire, plus précisément, de manière à ce que le centre du pixel touché soit à l'intérieur d'un polygone joignant les centres des pixels de $V$.

On estime alors la coordonnée x du point d'interaction à partir de :

$$\hat{x} = U(B_x) \qquad (4)$$

où $B_x$ est la coordonnée selon Ox du barycentre $B$ des pixels de $V$ pondérés par leurs valeurs d'excursion respectives $M_Q$ et $U$ est une fonction qui sera explicitée plus loin. On estimerait de la même façon la coordonnée $y$ du point d'interaction $\hat{y} = U(B_y)$ où $B_y$ est la coordonnée selon Oy du barycentre $B$.

Dans un but de simplification de l'exposé, mais sans préjudice de généralisation au cas bi-dimensionnel, nous décrirons ci-après le second mode de réalisation dans un cas mono-dimensionnel.

Les pixels de $V$ sont alors situés sur l'axe Ox de part et d'autre du point touché. Par exemple, les pixels de $V$ peuvent être choisis comme étant ceux situés aux points de coordonnées $x_k = kp$, $k \in \{k_0 - K, ..., k_0 - 1, k_0 + 1, ..., k_0 + K\}$.

Dans ce cas, la coordonnée $B_x$ du barycentre peut être calculée au moyen de :

$$B_x = \frac{\displaystyle\sum_{k=k_0-K}^{k=k_0+K} M_{(k)} x_k}{\displaystyle\sum_{k=k_0-K}^{k=k_0+K} M_{(k)}} \qquad (5)$$

où $M_{(k)}$, $K \neq k_0$, désigne l'excursion du signal $S_k$ issu du pixel $k$ entre les instants $t_1$ et $t_2$ précédemment définis et $M_{(k_0)}$

désigne l'amplitude du signal issu du pixel touché.

De manière plus générale, on peut calculer la coordonnée du barycentre en pondérant les différentes excursions à l'aide de coefficients donnant la pertinence des contributions respectives des différents pixels, un pixel plus éloigné du pixel touché étant affecté d'un coefficient plus faible qu'un pixel plus proche du pixel touché :

$$B_x = \frac{\sum_{k=k_0-K}^{k=k_0+K} \alpha_k M_{(k)} x_k}{\sum_{k=k_0-K}^{k=k_0+K} \alpha_k M_{(k)}} \qquad (6)$$

où les $\alpha_k$ (réels positifs) sont des coefficients de pondération, dépendant de la position du pixel $k$ par rapport au pixel touché $k_0$. Ces coefficients peuvent être déterminés par simulation. La valeur d'un coefficient de pondération est d'autant plus élevée que le pixel correspondant est plus proche du pixel touché. La valeur des coefficients $\alpha_k$ est généralement comprise entre 0 et 2. On peut, par exemple, prendre $\alpha_{k_0} = 2$, $\alpha_{K_0 \pm 1} = 1$, $\alpha_{k_0 \pm 2} = 0.3$ lorsque $K = 2$.

Dans tous les cas, le barycentre est obtenu comme somme pondérée normalisée de mesures de signal réalisées sur le pixel touché et sur des pixels adjacents.

Pour simplifier l'exposé du second mode de réalisation, nous supposerons dans la suite que l'origine du détecteur est prise au centre du pixel touché.

Lorsque le détecteur est uniformément illuminé, c'est-à-dire lorsque les photons atteignent au hasard et uniformément le détecteur, $B_x$ est une variable aléatoire non uniformément répartie sur l'intervalle [-$p$/2,$p$/2]. On ne peut donc utiliser directement la valeur $B_x$ (ou une fonction linéaire de $B_x$) lors de la mesure pour estimer la coordonnée du point d'interaction.

La fonction $U$ choisie pour uniformiser la distribution de la coordonnée du barycentre, autrement dit pour égaliser son histogramme sur l'intervalle [-$p$/2,$p$/2] est donnée par :

$$U(B_x) = \left( F(B_x) - 1/2 \right) p \qquad (7)$$

où $U(B_x)$ est la fonction de répartition de la variable aléatoire $B_x$, lorsque le détecteur est uniformément illuminé. En effet, la fonction de répartition $F(B_x)$ est par définition une variable aléatoire uniforme (de l'intervalle [-$p$/2,$p$/2] sur l'intervalle [0,1]) et la fonction $U(B_x)$ est donc elle-même une variable aléatoire uniformément répartie sur [-$p$/2,$p$/2] et prenant ses valeurs dans le même intervalle.

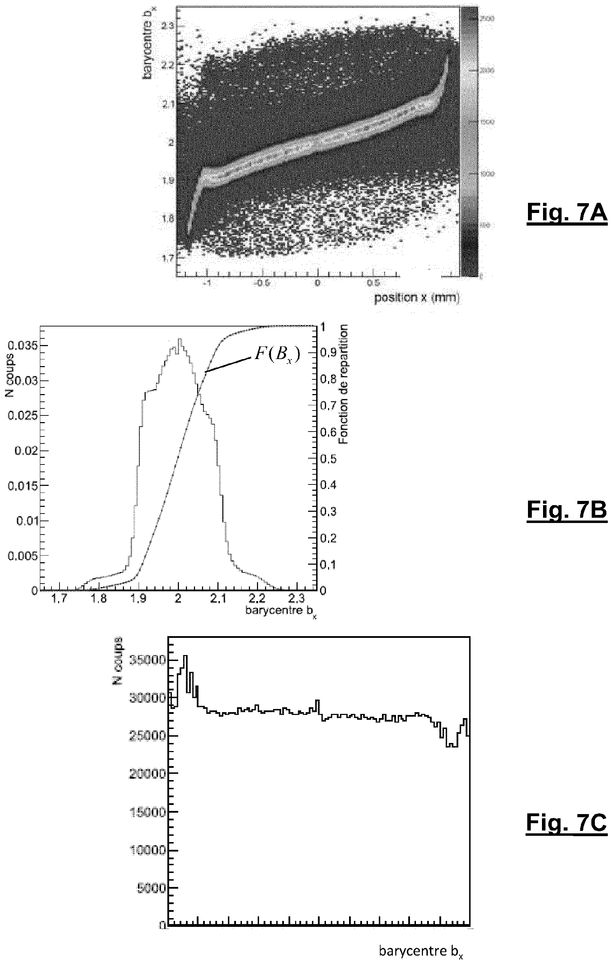

La Fig. 7A illustre de manière schématique la distribution statistique d'un barycentre des pixels de $V$ en fonction de différentes positions du point d'interaction.

Plus précisément, en Fig. 7A l'axe des abscisses est confondu avec l'axe Ox du détecteur et on représenté en ordonnées les valeurs prises par la variable aléatoire $B_x$, lorsque le détecteur est uniformément illuminé. Le barycentre considéré ici est celui des pixels à gauche et à droite du point touché ($B_x$ étant alors obtenu à partir de l'expression (5) avec $K = 1$).

Pour chaque valeur de $B_x$, on a représenté par un niveau de couleur le nombre de coups, c'est-à-dire le nombre de fois que cette valeur a été observée.

La Fig. 7B représente l'histogramme de $B_x$ correspondant aux observations de la Fig. 7A. Cet histogramme a été obtenu en sommant, pour chaque valeur de $B_x$, le nombre d'occurrences observées sur le segment [-$p$/2,$p$/2]. On a également représenté sur cette figure la fonction de répartition de $B_x$, prenant ses valeurs dans l'intervalle [0,1], indiqué à la droite de la figure.

La Fig. 7C représente l'histogramme d'une transformée de ce barycentre par la fonction $U$. On remarque que la variable aléatoire $U(B_x)$ est sensiblement uniformément répartie sur [-$p$/2,$p$/2]. La relativement faible déviation par rapport à l'uniformité, observée en bordure du pixel touché n'a en pratique que peu d'influence sur la qualité de l'estimation de la position du point d'interaction.

Comme indiqué plus haut, la méthode d'estimation de la position d'interaction selon le second mode de réalisation de l'invention nécessite une phase préalable de calibration. A la différence notable du premier mode de réalisation, la calibration est effectuée sous illumination uniforme du détecteur et non par balayage à l'aide d'un faisceau fortement collimaté.

En pratique, on déterminera dans cette phase de calibration la loi de probabilité de la coordonnée $B_x$ du barycentre. Pour ce faire, on mesurera, pour chaque événement, c'est-à-dire pour chaque pixel touché, les excursions $M_Q$ des signaux issus des pixels voisins $Q \in V$ (ainsi que la valeur de l'amplitude du signal issu du pixel touché) et l'on

calculera la coordonnée $B_x$ du barycentre $B$.

L'histogramme des valeurs de $B_x$ ainsi obtenues (comme représenté en Fig. 7B) donne sa loi de probabilité. On détermine à partir de cet histogramme la fonction de répartition $F(B_x)$ et l'on en déduit $U(B_x)$ pour chaque valeur de $B_x$. Les valeurs $U(B_x)$ en fonction de $B_x$ sont stockées en mémoire sous forme d'une table (*look-up table*).

Lors de la phase ultérieure de mesure, c'est-à-dire lors de l'estimation de la position d'interaction du rayonnement, on calcule à l'étape 640 la coordonnée $B_x$ du barycentre des excursions $M_Q$ (ainsi que de la valeur de l'amplitude du signal issu du pixel touché) et l'on en déduit l'estimation $\hat{x} = U(B_x)$ à partir de la table précitée.

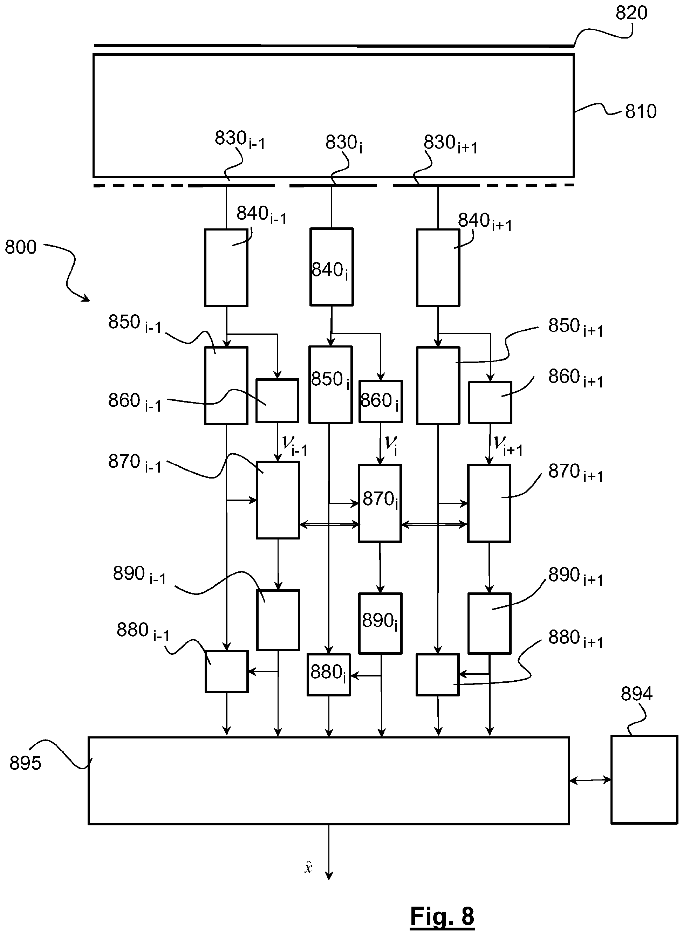

La Fig. 8 représente de manière schématique la structure d'un détecteur de rayonnement ionisant selon un mode de réalisation de l'invention.

Le détecteur de rayonnement ionisant 800 comprend un élément semi-conducteur 810 dont la face avant, exposée au rayonnement incident, est recouverte d'une première électrode 820 et la face arrière est recouverte d'une pluralité de secondes électrodes élémentaires ou pixels $830_i$ distribuées selon un arrangement périodique mono- ou bi-dimensionnel.

A chaque pixel $830_i$ correspond une voie de lecture $840_i$ adaptée à lire le signal de charge issu de ce pixel. Cette voie de lecture peut elle-même comporter différents étages de traitement tels que pré-amplification, pré-filtrage, conversion analogique-numérique. La conversion analogique-numérique peut intervenir par exemple en sortie de l'étage de pré-amplification ou en sortie de l'étape de filtrage.

Le signal en sortie de la voie $840_i$ est d'une part filtré par un filtre $850_i$ et d'autre part, analysé par un discriminateur à seuil $860_i$.

Le filtre $850_i$ est un filtre linéaire (ou non) destiné à mettre en forme l'impulsion reçue. Il peut par exemple être un filtre cusp ou un filtre à réponse gaussienne, connu en soi.

Le discriminateur à seuil $860_i$ détecte si le signal de la voie $840_i$ franchit un seuil prédéterminé et génère un signal booléen $v_i$ indiquant le franchissement ou non de ce seuil. Le signal $v_i$ indique si le pixel $830_i$ a été touché.

Le signal mis en forme, en sortie du filtre $850_i$, ainsi que le signal booléen $v_i$, sont fournis à un dispositif de synchronisation $870_i$. Lorsque le signal $v_i$ indique que le pixel $830_i$ a été touché, le dispositif de synchronisation effectue une détection de crête du signal mis en forme et identifie l'instant $t^i_0$ auquel le maximum de l'impulsion est atteint. Il fournit alors l'instant $t^i_0$ ainsi, qu'optionnellement, la valeur maximale du signal mis en forme, $E^i_0$, atteinte à l'instant $t^i_0$.

Le signal mis en forme, en sortie de $850_i$, est également fourni à un buffer FIFO $880_i$ qui stocke en permanence les $L$ derniers échantillons de ce signal.

Le module de contrôle, $890_i$, reçoit l'instant $t^i_0$ et stoppe l'écriture dans le buffer de sorte que les échantillons de l'impulsion autour de $t^i_0$ y soient stockés. Qui plus est, le module de contrôle génère une pluralité *Card(V)* de signaux (non représentés) stoppant l'écriture dans les buffers associés aux pixels voisins $Q \in V$.

Le cas échéant, les dispositifs de synchronisation respectifs de voies adjacentes, c'est-à-dire correspondant à des pixels adjacents, sont reliés entre eux et décident du pixel touché en fonction des maximas respectifs des signaux lus par ces voies, c'est-à-dire arbitrent le pixel qui a reçu l'impulsion la plus forte (flèches à double trait). Ainsi, le dispositif de synchronisation $870_i$ peut comparer la valeur $E^i_0$ avec les valeurs correspondantes des voies adjacentes ( $E^{i-1}_0$ et $E^{i+1}_0$ dans le cas d'un arrangement mono-dimensionnel) et en déduire si le pixel $830_i$ est bien retenu comme pixel touché (auquel cas les pixels adjacents $830_{i-1}$ et $830_{i+1}$ ne le sont pas).

Une unité de traitement 895 récupère, pour chaque pixel touché, à partir des buffers $880_i$ la valeur $E^i_0$ correspondant au pixel (retenu comme) touché ainsi que les amplitudes des signaux des pixels voisins $Q \in V$ aux instants $t^i_0 - \Delta t_1$ et $t^i_0 + \Delta t_2$ (et le cas échéant la valeur de l'amplitude du signal du pixel touché au temps d'impact). Il en déduit les excursions $M_Q$, $Q \in V$ et met en oeuvre l'étape d'estimation 440 du premier mode de réalisation ou bien l'étape d'estimation 640 du second mode de réalisation.

L'unité de traitement 895 est reliée à une mémoire 894 dans laquelle sont stockées, dans le premier mode de réalisation les tables des valeurs $p(M_Q|x_i)$ pour chaque pixel voisin $Q \in V$ ainsi qu'optionnellement la table des valeurs $P(E_0|x_i)$ ou bien, dans le second mode de réalisation, la table des valeurs $U(B_x) = (F(B_x)-1/2)p$.

Dans la phase de calibration du premier mode de réalisation, le détecteur 800 est balayé selon un axe (Ox, Oy) avec un faisceau fortement collimaté et pour chaque position du faisceau (c'est-à-dire chaque position $x_i$, $i = 1,..,N$,

du point d'interaction), l'unité de calcul détermine les excursions $M_Q$ des signaux issus des pixels voisins $Q \in V$ du pixel touché. Pour chacun des pixels voisins, elle incrémente un compteur de coups associée à la valeur de l'excursion $M_Q$ observée (les valeurs observées sont rangées selon une pluralité de valeurs discrètes). Au terme de l'illumination de la position de coordonnée $x_i$, les lois de probabilité conditionnelles des excursions $M_Q$ connaissant $x_i$ sont stockées dans la mémoire 894. Le processus est répété pour chacune des positions $x_i$. L'unité de calcul est synchronisée pour ce faire avec les moyens de balayage du faisceau collimaté (non représentés).

Dans la phase de calibration du second mode de réalisation, le détecteur 800 est uniformément illuminé par un rayonnement ionisant. Pour chaque événement, c'est-à-dire pour chaque interaction, l'unité de calcul détermine les excursions $M_Q$ des signaux issus des pixels voisins $Q \in V$ du pixel touché et calcule leur barycentre, et détermine sa coordonnée $B_x$. Pour chaque valeur de $B_x$ observée (les valeurs observées sont rangées selon une pluralité de valeurs discrètes), un compteur de coups associé à cette valeur est incrémenté. A la fin de l'étape de calibration la fonction de répartition $F(B_x)$ est calculée puis la fonction $U(B_x)$ en est déduite et stockée dans la mémoire 894.

Dans la description des premiers et second modes de réalisation, la position du point d'interaction a été déterminée à partir des mesures des excursions des signaux issus des pixels adjacents au pixel touché (et le cas échéant de l'amplitude du signal issu du pixel touché).

Toutefois, de manière plus générale, ces mesures ne sont pas nécessairement des excursions de signal au sens défini plus haut. Par exemple, on pourra prendre comme mesure du signal une combinaison, en particulier une combinaison linéaire des valeurs d'amplitudes de ce signal en une pluralité d'instants $t_1,...t_m$ dudit signal issu du pixel considéré, les instants $t_1,...t_m$ étant déterminés en fonction de l'instant d'impact $t_0$. Il pourra par exemple s'agir d'une combinaison linéaire de 4 ou 5 valeurs de l'amplitude du signal issu du pixel considéré, en des instants déterminés par rapport à l'instant d'impact $t_0$.

## Revendications

1. Méthode de détection d'un rayonnement ionisant à l'aide d'un détecteur semi-conducteur pixellisé en une pluralité de pixels, chaque pixel fournissant un signal caractéristique de la charge qu'il collecte lors d'une interaction du rayonnement ionisant avec le détecteur, la méthode comprenant les étapes suivantes :

   (a) détermination d'un pixel (410,610), dit pixel touché, dont l'amplitude du signal excède un seuil prédéterminé ;
   (b) détermination d'un instant ($t_0$), dit instant d'impact, par comparaison du signal dudit pixel touché avec un seuil prédéterminé et obtention d'un premier instant ($t_1$) antérieur à l'instant d'impact ainsi que d'un second instant ($t_2$) postérieur à l'instant d'impact, lesdits premier et second instants étant déterminés à partir de l'instant d'impact (420, 620) ;
   (c) pour au moins un pixel voisin du pixel touché, détermination d'une mesure d'une excursion du signal dudit pixel voisin entre lesdits premier et second instants (430,630), ladite excursion du signal étant caractéristique de l'écart d'amplitude du pixel voisin entre lesdits premier et second instants;
   (d) estimation d'au moins une coordonnée du point de l'interaction du rayonnement ionisant à partir de ladite mesure (440, 640).

2. Méthode de détection d'un rayonnement ionisant selon la revendication 1, **caractérisée en ce que** lesdits premier et second instants sont déterminés comme ceux présentant une dispersion statistique maximale de la dite excursion de signal.

3. Méthode de détection d'un rayonnement ionisant selon la revendication 2, **caractérisée en ce qu'**à l'étape (c), on détermine les excursions respectives, $M_Q$, des signaux d'un ensemble $V$ de pixels voisins, $Q$, du point touché et qu'à l'étape (d), on estime la coordonnée du point d'interaction du rayonnement ionisant à partir desdites excursions.

4. Méthode de détection d'un rayonnement ionisant selon la revendication 3, **caractérisée en ce que** la coordonnée, $x$, du point d'interaction est estimée selon une estimation du maximum de vraisemblance, en maximisant conjointement les probabilités conditionnelles $p(M_Q|x_i)$, $Q \in V$, où les $x_i$ sont une pluralité de valeurs discrètes possibles de ladite coordonnée, les lois des probabilités conditionnelles $p(M_Q|x_i)$ ayant été préalablement déterminées dans une phase de calibration ou de simulation.

5. Méthode de détection d'un rayonnement ionisant selon la revendication 4, **caractérisée en ce que** la coordonnée, $x$, du point d'interaction est estimée au moyen de :

$$\hat{x} = \arg\max_{i} \left( \prod_{Q \in V} P\left( M_Q | x_i \right) \right)$$

**6.** Méthode de détection d'un rayonnement ionisant selon la revendication 3, **caractérisée en ce que** la coordonnée, $x$, du point d'interaction est estimée selon une estimation du maximum de vraisemblance, en maximisant conjointement les probabilités conditionnelles $p(\overline{M}_Q | x_i)$, $Q \in V$, où $\overline{M}_Q$ est l'excursion normalisée par l'énergie $E_0$ du signal du pixel touché et où les $x_i$ sont une pluralité de valeurs discrètes possibles de ladite coordonnée, les lois des probabilités conditionnelles $p(\overline{M}_Q | x_i)$ ayant été préalablement déterminées dans une phase de calibration ou de simulation.

**7.** Méthode de détection d'un rayonnement ionisant selon la revendication 6, **caractérisée en ce que** la coordonnée, $x$ du point d'interaction est estimée au moyen de :

$$\hat{x} = \arg\max_{i} \left( \prod_{Q \in V} P\left( \overline{M}_Q | x_i \right) \right)$$

**8.** Méthode de détection d'un rayonnement ionisant selon la revendication 3, **caractérisée en ce que** la cordonnée, $x$, du point d'interaction est estimée selon une estimation du maximum de vraisemblance, en maximisant conjointement les probabilités conditionnelles $p(M_Q | x_i)$ ainsi que les probabilités conditionnelles $P(E_0 | x_i)$, où $E_0$ représente l'énergie du signal du pixel touché et les $x_i$ sont une pluralité de valeurs discrètes possibles de ladite coordonnée, les lois de probabilités conditionnelles $p(M_Q | x_i)$ et $P(E_0 | x_i)$ ayant été préalablement déterminées dans une phase de calibration ou de simulation.

**9.** Méthode de détection d'un rayonnement ionisant selon la revendication 8, **caractérisée en ce que** la coordonnée, $x$, du point d'interaction est estimée par :

$$\hat{x} = \arg\max_{i} \left( P( E_n | x_i) \prod_{Q \in V} P\left( M_Q | x_i \right) \right)$$

**10.** Méthode de détection d'un rayonnement ionisant selon la revendication 3, **caractérisée en ce que** la coordonnée du point d'interaction est estimée par :

$$\hat{x} = U\left( B_x \right)$$

où $B_x$ est la coordonnée du barycentre des pixels de $V$ pondérés par leurs excursions respectives, $M_Q$, et du pixel touché, pondéré par l'amplitude du signal dudit pixel touché au temps d'impact, et où $U(B_x)$ est une fonction uniformisant la distribution de $B_x$ sous illumination uniforme du récepteur, déterminée par calibration ou simulation.

**11.** Méthode de détection d'un rayonnement ionisant selon la revendication 10, **caractérisée en ce que** la fonction $U(B_x)$ est déterminée par $U(B_x) = p[F(B_x)\text{-}1/2]$ où $p$ est le pas de pixellisation du détecteur et $F(B_x)$ est la fonction de répartition du barycentre $B_x$ sous illumination uniforme du détecteur.

**12.** Détecteur de rayonnement ionisant comprenant un élément semi-conducteur (810) présentant une face avant, exposée au rayonnement ionisant, recouverte d'une première électrode (820), et une face arrière recouverte d'une pluralité d'électrodes élémentaires (830$_i$), dites pixels, chaque pixel (830$_i$) étant associé à une voie de lecture (840$_i$) adaptée à lire un signal de charge issu de ce pixel lors d'une interaction du rayonnement avec l'élément semi-conducteur, ledit détecteur étant **caractérisé en ce qu'**il comprend en outre, pour chaque voie de lecture d'un pixel :

- des moyens de discrimination (860$_i$) comparant le signal lu à un seuil prédéterminé et générant un signal booléen indiquant si ledit pixel est touché;

- des moyens de synchronisation (870i) déterminant, lorsque le signal booléen indique que ledit pixel est touché, l'instant, dit instant d'impact, auquel le signal lu atteint son maximum ;
- des moyens de contrôle (890i) recevant l'instant d'impact et contrôlant, en fonction de ceux-ci, des moyens de stockage (880i) destinés à stocker des échantillons de signaux lus d'un ensemble de pixels voisins du pixel touché ;

ledit détecteur comprenant en outre :

- une unité de traitement (895) adaptée à obtenir une mesure de l'excursion d'un signal lu d'au moins un pixel appartenant à l'ensemble de pixels voisins, l'excursion étant mesurée entre un premier instant, antérieur à l'instant d'impact, et un second instant, postérieur à l'instant d'impact, ladite excursion étant caractéristique de l'écart d'amplitude du pixel de l'ensemble de pixels voisins, entre lesdits premier et second instants;

lesdits premier et second instants étant déterminés à partir du temps d'impact, et à déterminer au moins une coordonnée du point d'interaction à partir de la mesure ainsi obtenue.

13. Détecteur de rayonnement ionisant selon la revendication 12, **caractérisé en ce que** l'unité de traitement est adaptée à mesurer des excursions respectives ($M_Q$) de signaux lus dudit ensemble de pixels voisins, les excursions étant mesurées entre lesdits premier et second instants, l'unité de traitement déterminant au moins une coordonnée du point d'interaction à partir des excursions ainsi obtenues.

14. Détecteur de rayonnement ionisant selon la revendication 13, **caractérisé en ce que** les signaux lus par les voies de lecture sont filtrés par des moyens de filtrage (850i) en amont des moyens de synchronisation (870i) et des moyens de stockage (880i).

15. Détecteur de rayonnement ionisant selon l'une des revendications 12 à 14, **caractérisé en ce qu'**il comprend une mémoire (894) dans laquelle sont stockées, pour chaque pixel voisin appartenant audit ensemble, les probabilités conditionnelles des excursions, $p(M_Q|x_i)$, pour une pluralité de valeurs discrètes de la coordonnée $x_i$, $i = 1,..,N$.

16. Détecteur de rayonnement ionisant selon l'une des revendications 12 à 15, **caractérisé en ce qu'**il comprend une mémoire (894) dans laquelle est stockée, pour chaque point voisin appartenant audit ensemble, une table donnant la distribution statistique de l'excursion du signal lu de ce pixel.

**Patentansprüche**

1. Verfahren zum Detektieren einer ionisierenden Strahlung mit Hilfe eines Halbleiterdetektors, der in eine Mehrzahl von Pixeln pixeliert ist, wobei jedes Pixel ein Signal liefert, das für die Ladung charakteristisch ist, die es während einer Wechselwirkung der ionisierenden Strahlung mit dem Detektor sammelt, wobei das Verfahren die folgenden Schritte umfasst:

(a) Bestimmen eines Pixels (410, 610), genannt getroffenes Pixel, dessen Signalamplitude eine vorbestimmte Schwelle übersteigt;
(b) Bestimmen eines Zeitpunkts ($t_0$), genannt Auftreffzeitpunkt, durch Vergleich des Signals des getroffenen Pixels mit einer vorbestimmten Schwelle, und Erhalten eines ersten Zeitpunkts ($t_1$) vor dem Auftreffzeitpunkt sowie eines zweiten Zeitpunkts ($t_2$) nach dem Auftreffzeitpunkt, wobei der erste und der zweite Zeitpunkt ausgehend von dem Auftreffzeitpunkt (420, 620) bestimmt werden;
(c) für wenigstens ein zu dem getroffenen Pixel benachbartes Pixel, Bestimmen einer Messung einer Abweichung des Signals des benachbarten Pixels zwischen dem ersten und dem zweiten Zeitpunkt (430, 630), wobei die Abweichung des Signals für den Amplitudenabstand des benachbarten Pixels zwischen dem ersten und dem zweiten Zeitpunkt charakteristisch ist;
(d) Abschätzen wenigstens einer Koordinate des Wechselwirkungspunkts der ionisierenden Strahlung ausgehend von der Messung (440, 640).

2. Verfahren zum Detektieren einer ionisierenden Strahlung nach Anspruch 1, **dadurch gekennzeichnet, dass** der erste und der zweite Zeitpunkt als diejenigen bestimmt werden, die eine maximale statistische Dispersion der Abweichung des Signals aufweisen.

3. Verfahren zum Detektieren einer ionisierenden Strahlung nach Anspruch 2, **dadurch gekennzeichnet, dass** man im Schritt (c) die jeweiligen Abweichungen $M_Q$ der Signale einer Gesamtheit $V$ von benachbarten Pixeln $Q$ des getroffenen Punkts bestimmt, und man im Schritt (d) die Koordinate des Wechselwirkungspunkts der ionisierenden Strahlung ausgehend von den Abweichungen abschätzt.

4. Verfahren zum Detektieren einer ionisierenden Strahlung nach Anspruch 3, **dadurch gekennzeichnet, dass** die Koordinate $x$ des Wechselwirkungspunkts gemäß einer Abschätzung der maximalen Wahrscheinlichkeit abgeschätzt wird, indem man gemeinsam die bedingten Wahrscheinlichkeiten $p(M_Q|x_i)$, $Q \in V$, maximiert, wobei die $x_i$ eine Mehrzahl von möglichen diskreten Werten der Koordinate sind, wobei die Gesetze der bedingten Wahrscheinlichkeiten $p(M_Q|x_i)$ zuvor in einer Kalibrierungs- oder Simulationsphase bestimmt worden sind.

5. Verfahren zum Detektieren einer ionisierenden Strahlung nach Anspruch 4, **dadurch gekennzeichnet, dass** die Koordinate $x$ des Wechselwirkungspunkts abgeschätzt wird mit Hilfe von:

$$\hat{x} = \arg\max_i \left( \prod_{Q \in V} P\left( M_Q \middle| x_i \right) \right)$$

6. Verfahren zum Detektieren einer ionisierenden Strahlung nach Anspruch 3, **dadurch gekennzeichnet, dass** die Koordinate $x$ des Wechselwirkungspunkts gemäß einer Abschätzung der maximalen Wahrscheinlichkeit abgeschätzt wird, indem man gemeinsam die bedingten Wahrscheinlichkeiten $p(\overline{M}_Q|x_i)$, $Q \in V$, maximiert, wobei $\overline{M}_Q$ die durch die Energie $E_0$ normierte Abweichung des Signals des getroffenen Pixels ist, und wobei die $x_i$ eine Mehrzahl von möglichen diskreten Werten der Koordinate sind, wobei die Gesetze der bedingten Wahrscheinlichkeiten $p(\overline{M}_Q|x_i)$ zuvor in einer Kalibrierungs- oder Simulationsphase bestimmt worden sind.

7. Verfahren zum Detektieren einer ionisierenden Strahlung nach Anspruch 6, **dadurch gekennzeichnet, dass** die Koordinate $x$ des Wechselwirkungspunkts abgeschätzt wird mit Hilfe von:

$$\hat{x} = \arg\max_i \left( \prod_{Q \in V} P\left( \overline{M}_Q \middle| x_i \right) \right)$$

8. Verfahren zum Detektieren einer ionisierenden Strahlung nach Anspruch 3, **dadurch gekennzeichnet, dass** die Koordinate $x$ des Wechselwirkungspunkts abgeschätzt wird gemäß einer Abschätzung des Maximums der Wahrscheinlichkeit, indem man gemeinsam die bedingten Wahrscheinlichkeiten $p(M_Q|x_i)$ sowie die bedingten Wahrscheinlichkeiten $P(E_0|x_i)$ maximiert, wobei $E_0$ die Energie des Signals des getroffenen Pixels repräsentiert, und die $x_i$ eine Mehrzahl von möglichen diskreten Werten der Koordinate sind, wobei die Gesetze der bedingten Wahrscheinlichkeiten $p(M_Q|x_i)$ und $P(E_0|x_i)$ zuvor in einer Kalibrierungs- oder Simulationsphase bestimmt worden sind.

9. Verfahren zum Detektieren einer ionisierenden Strahlung nach Anspruch 8, **dadurch gekennzeichnet, dass** die Koordinate $x$ des Wechselwirkungspunkts abgeschätzt wird durch:

$$\hat{x} = \arg\max_i \left( P(E_n|x_i) \prod_{Q \in V} P\left( M_Q \middle| x_i \right) \right)$$

10. Verfahren zum Detektieren einer ionisierenden Strahlung nach Anspruch 3, **dadurch gekennzeichnet, dass** die Koordinate des Wechselwirkungspunkts abgeschätzt wird durch:

$$\hat{x} = U\left( B_x \right)$$

wobei $B_x$ die Koordinate des Schwerpunkts der Pixel von $V$ ist, gewichtet mit ihren jeweiligen Abweichungen $M_Q$, sowie des getroffenen Pixels, gewichtet mit der Amplitude des Signals des getroffenen Pixels zum Auftreffzeitpunkt,

und wobei $U(B_x)$ eine Funktion ist, die die Verteilung von $B_x$ unter gleichförmiger Bestrahlung des Empfängers vergleichmäßigt, bestimmt durch Kalibrierung oder Simulation.

**11.** Verfahren zum Detektieren einer ionisierenden Strahlung nach Anspruch 10, **dadurch gekennzeichnet, dass** die Funktion $U(B_x)$ bestimmt wird durch $U(B_x) = p[F(B_x) - 1/2]$, wobei $p$ der Pixelierungsschritt des Detektors ist, und $F(B_x)$ die Verteilungsfunktion des Schwerpunkts $B_x$ unter gleichförmiger Bestrahlung des Detektors ist.

**12.** Detektor für ionisierende Strahlung, umfassend ein Halbleiterelement (810), das eine Vorderfläche aufweist, die der ionisierenden Strahlung ausgesetzt ist, und mit einer ersten Elektrode (820) bedeckt ist, sowie eine Rückfläche, die mit einer Mehrzahl von Elementarelektroden ($830_i$) bedeckt ist, genannt Pixel, wobei jedes Pixel ($830_i$) einem Ausleseweg ($840_i$) zugeordnet ist, der dazu geeignet ist, ein Ladungssignal zu lesen, das von diesem Pixel während einer Wechselwirkung der Strahlung mit dem Halbleiterelement ausgegeben wird, wobei der Detektor **dadurch gekennzeichnet ist, dass** er ferner für jeden Ausleseweg eines Pixels Folgendes umfasst:

- Diskriminierungsmittel ($860_i$), die das ausgelesene Signal mit einer vorbestimmten Schwelle vergleichen und ein Boolsches Signal generieren, das angibt, ob das Pixel getroffen worden ist;
- Synchronisierungsmittel ($870_i$), die dann, wenn das Boolsche Signal angibt, dass das Pixel getroffen worden ist, den Zeitpunkt bestimmen, genannt Auftreffzeitpunkt, an dem das ausgelesene Signal sein Maximum erreicht;
- Steuermittel ($890_i$), die den Auftreffzeitpunkt empfangen und als Funktion desselben Speichermittel ($880_i$) steuern, die dazu ausgelegt sind, Proben von ausgelesenen Signalen einer Gesamtheit von zu dem getroffenen Pixel benachbarten Pixeln zu speichern;

wobei der Detektor ferner Folgendes umfasst:

- eine Verarbeitungseinheit (895), die dazu ausgelegt ist, eine Messung der Abweichung eines ausgelesenen Signals von wenigstens einem Pixel zu erhalten, das zu der Gesamtheit von benachbarten Pixeln gehört, wobei die Abweichung gemessen wird zwischen einem ersten Zeitpunkt vor dem Auftreffzeitpunkt und einem zweiten Zeitpunkt nach dem Auftreffzeitpunkt, wobei die Abweichung für den Amplitudenabstand des Pixels von der Gesamtheit von Nachbarpixeln zwischen dem ersten und dem zweiten Zeitpunkt charakteristisch ist;

wobei der erste und der zweite Zeitpunkt ausgehend von dem Auftreffzeitpunkt bestimmt werden, und wenigstens eine Koordinate des Wechselwirkungspunkts ausgehend von der derart erhaltenen Messung zu bestimmen.

**13.** Detektor für ionisierende Strahlung nach Anspruch 12, **dadurch gekennzeichnet, dass** die Verarbeitungseinheit dazu ausgelegt ist, jeweilige Abweichungen ($M_Q$) von ausgelesenen Signalen der Gesamtheit von benachbarten Pixeln zu messen, wobei die Abweichungen gemessen werden zwischen dem ersten und dem zweiten Zeitpunkt, wobei die Verarbeitungseinheit wenigstens eine Koordinate des Wechselwirkungspunkts ausgehend von den derart erhaltenen Abweichungen bestimmt.

**14.** Detektor für ionisierende Strahlung nach Anspruch 13, **dadurch gekennzeichnet, dass** die mittels der Auslesewege ausgelesenen Signale durch Filterungsmittel ($850_i$) stromaufwärts der Synchronisierungsmittel ($870_i$) und der Speichermittel ($880_i$) gefiltert werden.

**15.** Detektor für ionisierende Strahlung nach einem der Ansprüche 12 bis 14, **dadurch gekennzeichnet, dass** er einen Speicher (894) umfasst, in dem für jedes benachbarte Pixel, das zu der Gesamtheit gehört, die bedingten Wahrscheinlichkeiten der Abweichungen $p(M_Q|x_i)$ für eine Mehrzahl von diskreten Werten der Koordinate $x_i$, $i = 1,..,N,$ gespeichert sind.

**16.** Detektor für ionisierende Strahlung nach einem der Ansprüche 12 bis 15, **dadurch gekennzeichnet, dass** er einen Speicher (894) umfasst, in dem für jeden benachbarten Punkt, der zu der Gesamtheit gehört, eine Tabelle gespeichert ist, die die statistische Verteilung der Abweichung des ausgelesenen Signals dieses Pixels angibt.

## Claims

**1.** Method for detecting ionising radiation with the aid of a semi-conductor detector which is pixelated into a number of pixels, where each pixel provides a signal which is characteristic of the charge it collects during interaction of ionising radiation with the detector, the method comprising the following steps:

(a) determination of a pixel (410, 610), called the affected pixel, whose signal amplitude exceeds a predetermined threshold;

(b) determination of an instant ($t_0$), called the instant of impact, by comparing the signal of said affected pixel with a predetermined threshold and obtaining a first instant ($t_1$) before the instant of impact and a second instant ($t_2$) after the instant of impact, said first and second instants of impact being determined from the instant of impact (420, 620) ;

(c) for at least one pixel adjacent to the affected pixel, determination of a measurement of a deviation of the signal of said adjacent pixel between said first and second instants (430, 630), said deviation being characteristic of an amplitude difference of the adjacent pixel between said first and second instants;

(d) estimation of at least one coordinate of the point of interaction of the ionising radiation from said measurement (440, 640).

2. Method for detecting ionising radiation according to claim 1, **characterised in that** said first and second temporal shifts are determined in a prior calibration phase as those which lead to first and second instants which exhibit maximum statistical dispersion of said signal deviation.

3. Method for detecting ionising radiation according to claim 2, **characterised in that**, at step (c), the respective deviations, $M_Q$, of the signals of an assembly $V$ of pixels, $Q$, adjacent to the affected point are determined and, at step (d), the coordinate of the point of interaction of the ionisation radiation is estimated from said deviations.

4. Method for detecting ionising radiation according to claim 3 **characterised in that** the coordinate, $x$, of the point of interaction is estimated using an estimate of the maximum likelihood, by jointly maximising the conditional probabilities $p(M_Q|x_i)$, $Q \in V$, where the $x_i$ are multiple discrete possible values of said coordinate, where the conditional probability functions $p(M_Q|x_i)$ have been determined beforehand in a calibration or simulation phase.

5. Method for detecting ionising radiation according to claim 4, **characterised in that** the coordinate, $x$, of the point of interaction is estimated by means of:

$$\hat{x} = \arg\max_i \left( \prod_{Q \in V} P\left( M_Q \middle| x_i \right) \right)$$

6. Method for detecting ionising radiation according to a claim 5, **characterised in that** the coordinate, $x$, of the point of interaction is estimated using an estimate of the maximum likelihood, by jointly maximising the conditional probabilities $p(\overline{M}_Q|x_i)$, $Q \in V$, where $\overline{M}_Q$ is the deviation normalised by the energy $E_0$ of the signal of the affected pixel and where the $x_i$ are multiple discrete possible values of the said coordinate, where the conditional probability functions $p(\overline{M}_Q|x_i)$ have been determined beforehand in a calibration or simulation phase.

7. Method for detecting ionising radiation according to claim 6, **characterised in that** the coordinate, $x$, of the point of interaction is estimated by means of:

$$\hat{x} = \arg\max_i \left( \prod_{Q \in V} P\left( \overline{M}_Q \middle| x_i \right) \right)$$

8. Method for detecting ionising radiation according to claim 4, **characterised in that** the coordinate, $x$, of the point of interaction is estimated using an estimate of the maximum likelihood by jointly maximising the conditional probabilities $p(M_Q|x_i)$ as well as conditional probabilities $P(E_0|x_i)$, where $E_0$ represents the energy of the affected pixel and the $x_i$ are multiple discrete possible values of said coordinate, where the conditional probability functions $p(M_Q|x_i)$ and $p(M_Q|x_i)$ have been determined beforehand in a calibration or simulation phase.

9. Method for detecting ionising radiation according to claim 8, **characterised in that** the coordinate, x, of the point of interaction is estimated by:

$$\hat{x} = \arg\max_{i}\left( P(E_n|x_i) \prod_{Q \in V} P\left(M_Q|x_i\right) \right)$$

**10.** Method for detecting ionising radiation according to claim 3, **characterised in that** the coordinate of the point of interaction is estimated by:

$$\hat{x} = U\left(B_x\right)$$

where $B_x$ is the coordinate of the barycentre of the pixels of $V$ weighted by their respective deviations, $M_Q$, and of the affected pixel, weighted by the amplitude of the signal of said affected pixel at the time of impact, and where $U(B_x)$ is a function which renders uniform the distribution of $B_x$ under uniform illumination of the detector, determined by calibration or simulation.

**11.** Method for detecting ionising radiation according to claim 10, **characterised in that** the function $U(B_x)$ is determined by $U(B_x) = p[F(B_x) - 1/2]$ where $p$ is the pixelation interval of the detector and $F(B_x)$ is the distribution function of the barycentre $B_x$ under uniform illumination of the detector.

**12.** Ionising radiation detector comprising a semi-conductor element (810) which has a front side exposed to the ionising radiation covered with a first electrode (820), and a rear side covered with multiple elementary electrodes ($830_i$), known as pixels, where each pixel ($830_i$) is associated with a reading channel ($840_i$) suitable for reading a charge signal coming from this pixel during an interaction of the ionising radiation with the semi-conductor element, said detector being **characterised in that** it furthermore comprises, for each reading channel of a pixel:

- means of discrimination ($860_i$) which compare the signal read with a predetermined threshold and which generate a Boolean signal which indicates whether said pixel has been affected;
- means of synchronisation ($870_i$) which when the Boolean signal indicates that said pixel is affected, determines the instant, called the instant of impact, at which the signal that is read reaches its maximum;
- means of control ($890_i$), which receive the instant of impact and which control, as a function of the latter, means of storage ($880_i$) intended to store samples of signals read from a set of pixels adjacent to the affected pixel;
where the detector furthermore comprises:

- a processing unit (895) configured to obtain a measurement of deviation of a signal read from at least one pixel belonging to said assembly of adjacent pixels, said deviation being measured between a first instant before the instant of impact and a second instant after the instant of impact, said deviation being characteristic of an amplitude difference of the pixel belonging to said assembly of adjacent pixels, between said first and second instants, said first and second instants of impact being determined from the instant of impact; and to determine at least one coordinate of the point of interaction from the measurement thus obtained.

**13.** Ionising radiation detector according to claim 12, **characterised in that** the processing unit is configured to calculate respective deviations ($M_Q$) of signals read from said assembly of adjacent pixels, where the deviations are calculated between a first instant, before the instant of impact and a second instant, after the instant of impact, with the processing unit determining at least one coordinate of the point of interaction from the deviations thus obtained.

**14.** Ionising radiation detector according to claim 13, **characterised in that** the signals read by the reading channels are filtered by filtering means ($850_i$) upstream of the means of synchronisation ($870_i$) and means of storage ($880_i$).

**15.** Ionising radiation detector according to one of claims 12 to 14, **characterised in that** it comprises a memory (894) wherein are stored, for each adjacent pixel belonging to said assembly, the conditional probabilities of the deviations, $p(M_Q|x_i)$, for multiple discrete values of the coordinate $x_i$, $i = 1,..,N$.

**16.** Ionising radiation detector according to one of claims 12 to 15, **characterised in that** it comprises a memory (894) wherein are stored, for each adjacent point belonging to said assembly, a table which gives the statistical distribution of the deviations of the signal read for this pixel.

**Fig. 1**

**Fig. 2**

**Fig. 3A**

**Fig. 3B**

détermination d'un pixel touché $\qquad$ 410

détermination de l'instant d'impact $t_0$ ,d'un instant antérieur $t_1$ et d'un instant postérieur $t_2$ $\qquad$ 420

$\forall Q \in V$

détermination de l'excursion $M_Q$ du signal du pixel $Q$ entre les instants $t_1$ et $t_2$ $\qquad$ 430

estimation d'au moins une coordonnée $x$ du point d'interaction à partir de(s) excursion(s) $M_Q$ par maximisation conjointe des probabilités conditionnelles $p\left(M_Q\middle|x_i\right)$ $\qquad$ 440

## Fig. 4

Fig. 5A

Fig. 5B

détermination d'un pixel touché $\qquad$ 610

détermination de l'instant d'impact $t_0$, d'un instant antérieur $t_1$ et d'un instant postérieur $t_2$ $\qquad$ 620

$\forall Q \in V$
détermination de l'excursion $M_Q$ du signal du pixel $Q$ entre les instants $t_1$ et $t_2$ $\qquad$ 630

estimation d'au moins une coordonnée $x$ du point d'interaction à partir du barycentre $B_x$ des pixels $Q \in V$ affectés des poids $M_Q$ et du pixel touché
$\hat{x} = U(B_x)$ $\qquad$ 640

**Fig. 6**

**Fig. 7A**

$F(B_x)$

**Fig. 7B**

barycentre b$_x$

**Fig. 7C**

**Fig. 8**

## RÉFÉRENCES CITÉES DANS LA DESCRIPTION

**Documents brevets cités dans la description**

- US 6169287 B
- US 6002741 B
- EP 1548465 A